# EUROPEAN PATENT APPLICATION

(11) **EP 4 414 695 A1**
(43) Date of publication of application: **14.08.2024**
(21) Application number: 22877901.3
(22) Date of filing: 29.09.2022
(51) Int. Cl.: G01N 23/046, G01N 23/02

(54) **INSPECTION DEVICE FOR SCANNING AND INSPECTING OBJECT BEING INSPECTED**

(30) Priority: 08.10.2021 CN 202111173185
(71) Applicant: Nuctech Company Limited, TongFang Building Shuangqinglu Haidian District Beijing 100084 (CN)
(72) Inventor: CHEN, Zhiqiang, Beijing 100084 (CN); ZHANG, Li, Beijing 100084 (CN); HUANG, Qingping, Beijing 100084 (CN); JIN, Xin, Beijing 100084 (CN); CHANG, Ming, Beijing 100084 (CN); HONG, Mingzhi, Beijing 100084 (CN); ZHANG, Liguo, Beijing 100084 (CN)
(74) Representative: Cabinet Beau de Loménie
(86) International application number: PCT/CN2022/122491
(87) International publication number: WO 2023/056882

(57) **Abstract**

An inspection device used for scanning and inspecting an object to be inspected (2), includes: an inspection channel (1), where the object to be inspected (2) enters and exits the inspection device through the inspection channel (1); an imaging system (6) used to scan and inspect the object to be inspected (2), where the imaging system (6) includes a radiation source (6S) used to generate a ray, where the radiation source (6S) is disposed on one side of the inspection channel (1), and the ray at least forms a main beam surface (61) applicable to scan and inspect the object to be inspected (2); and a detector (6T) used to receive the ray passing through the object to be inspected (2), where the detector (6T) is disposed on the other side of the inspection channel (1) to form an inspection region (63) between the radiation source (6S) and the detector (6T); and a posture adjustment structure (4) disposed in the inspection region (63) and used to adjust a posture of the object to be inspected (2) located in the inspection region (63). The object to be inspected (2) has an inspection surface (21). The posture adjustment structure (4) may adjust the posture of the object to be inspected (2), so that the inspection surface (21) and the main beam surface (61) are in the same plane.

## Description

### TECHNICAL FIELD

The present disclosure relates to a field of a radiographic inspection technology, and more specifically, to an inspection device used for scanning and inspecting an object to be inspected.

### BACKGROUND

Radiation inspection technology is a technique that uses rays to inspect the inside of an object. Such technology may obtain information such as internal structure and density of the object without damaging the object. It is currently widely used in chest X-rays in hospitals, and security inspections in stations and airports.

In the existing radiographic inspection device, CT scanning technology may be used to inspect the object to be inspected. For example, the object to be inspected includes a thin layer structure, especially a "sandwich" type thin layer structure. The thin layer is small in thickness and adjacent layers of the thin layer have imaging interference. Traditional spiral scanning may cause interference of adjacent layers to the central layer (i.e. the thin layer), that is, when the ray passes through the central layer, it also passes through the adjacent layers, thereby affecting image distinguishing and recognition.

### SUMMARY

In view of this, the present disclosure provides an inspection device used for scanning and inspecting an object to be inspected.

In an aspect, an inspection device used for scanning and inspecting an object to be inspected is provided, including:
an inspection channel, where the object to be inspected enters and exits the inspection device through the inspection channel;
an imaging system configured to scan and inspect the object to be inspected, and the imaging system includes:
   a radiation source configured to generate a ray, where the radiation source is disposed on one side of the inspection channel, and the ray at least forms a main beam surface applicable to scan and inspect the object to be inspected; and
   a detector configured to receive the ray passing through the object to be inspected, where the detector is disposed on the other side of the inspection channel to form an inspection region between the radiation source and the detector; and
   a posture adjustment structure disposed in the inspection region and configured to adjust a posture of the object to be inspected located in the inspection region,
   where the object to be inspected has an inspection surface, and the posture adjustment structure adjusts the posture of the object to be inspected, so that the inspection surface and the main beam surface are in a same plane.

According to some exemplary embodiments, in the plane where the main beam surface is located, a relative position between the imaging system and the object to be inspected is changeable, so that the imaging system scans and inspects the object to be inspected at a plurality of angles.

According to some exemplary embodiments, the imaging system is rotatable relative to the object to be inspected in the plane where the main beam surface is located.

According to some exemplary embodiments, the imaging system includes a plurality of detectors. The plurality of detectors are disposed opposite to the radiation source to form a plurality of main beam surfaces between the radiation source and the plurality of detectors. The plurality of main beam surfaces are in the same plane. The posture adjustment structure may adjust the posture of the object to be inspected, so that the inspection surface and the plurality of main beam surfaces are in the same plane.

According to some exemplary embodiments, the posture adjustment structure may move the object to be inspected in a first direction, so that the object to be inspected has a plurality of inspection surfaces. The first direction is parallel to a conveying direction of the object to be inspected.

According to some exemplary embodiments, for each inspection surface, the object to be inspected is positioned by the posture adjustment structure, so that the inspection surface and the main beam surface are in the same plane.

According to some exemplary embodiments, the object to be inspected includes an inspection portion. The inspection portion has the inspection surface. A ratio of an area value of a projection of the inspection portion in the first direction to a size value of the inspection portion in the first direction is greater than or equal to 10. The first direction is parallel to a conveying direction of the object to be inspected.

According to some exemplary embodiments, a ratio of a size of the detector in the first direction to the size value of the inspection portion in the first direction is in a range of 1 to 8.

According to some exemplary embodiments, a focus size of the radiation source is less than or equal to 1 mm.

According to some exemplary embodiments, the posture adjustment structure includes:
a substrate extended in the first direction, where the substrate has a carrying surface, and the carrying surface is applicable to place the object to be inspected;
a first adjustment assembly disposed on the substrate and configured to drive the object to be inspected on the carrying surface to deviate around a second direction and configured to drive the object to be inspected to move in the first direction;
at least one second adjustment assembly disposed on the substrate and configured to drive the object to be inspected to rotate around a third direction,
where any two of the first direction, the second direction and the third direction intersect with each other.

According to some exemplary embodiments, the first adjustment assembly includes:
a chassis slideable relative to the substrate in the first direction;
a rotating element rotatably disposed on the chassis with an axis parallel to the second direction as a rotational axis, where the rotating element is configured to drive the object to be inspected on the carrying surface to deviate around the second direction under a driving of an external force, and the rotating element is configured to drive the object to be inspected to move in the first direction under a driving of the chassis.

According to some exemplary embodiments, the inspection region includes an entrance and an exit. The inspection device further includes a first transmission mechanism. The first transmission mechanism is disposed on a side of the entrance of the inspection region and configured to convey the object to be inspected to the inspection region.

According to some exemplary embodiments, the first transmission mechanism includes:
a driving device;
a lead screw connected to the driving device, where the lead screw may be driven by the driving device;
a first slide rail, where an extension direction of the first slide rail is parallel to an extension direction of the lead screw; and
a sliding mechanism connected to the lead screw, where the lead screw may drive the sliding mechanism to move, so that the sliding mechanism pushes the object to be inspected to slide on the first slide rail.

According to some exemplary embodiments, the imaging system includes a plurality of radiation sources and a plurality of detectors. The plurality of radiation sources are respectively disposed opposite to the plurality of detectors to form a plurality of source-detector assemblies. A main beam surface is formed between the source and the detector of each source-detector assembly. The main beam surfaces of the plurality of source-detector assemblies are located in the same plane. The posture adjustment structure may adjust the posture of the object to be inspected, so that the inspection surface and the main beam surfaces of the plurality of source-detector assemblies are in the same plane.

### BRIEF DESCRIPTION OF THE DRAWINGS

Through the following description of embodiments of the present disclosure with reference to the accompanying drawings, the above and other purposes, features, and advantages of the present disclosure will be clearer, in which:
FIG. 1 schematically shows a diagram of an entire structure of an inspection device according to an embodiment of the present disclosure;
FIG. 2 schematically shows a top view of a first transmission mechanism according to an embodiment of the present disclosure;
FIG. 3 schematically shows a cross-sectional view of an A-A plane in FIG. 2;
FIG. 4 schematically shows a schematic diagram of an adjustment method of a second adjustment assembly according to an embodiment of the present disclosure;
FIG. 5 schematically shows a schematic diagram of an adjustment method of a first adjustment assembly according to an embodiment of the present disclosure;
FIG. 6 schematically shows a main view of a first adjustment assembly according to an embodiment of the present disclosure;
FIG. 7 schematically shows a top view of a first adjustment assembly according to an embodiment of the present disclosure;
FIG. 8 schematically shows a cross-sectional view at A-A in FIG. 7;
FIG. 9 schematically shows a cross-sectional view at B-B in FIG. 7;
FIG. 10 schematically shows a schematic diagram of a structure of a knob according to an embodiment of the present disclosure;
FIG. 11 schematically shows a cross-sectional view at C-C in FIG. 7;
FIG. 12 schematically shows a side view of a first transmission mechanism according to an embodiment of the present disclosure;
FIG. 13 schematically shows a schematic diagram of a principle of radiation imaging according to an embodiment of the present disclosure;
FIG. 14 schematically shows a top view of a second adjustment assembly according to an embodiment of the present disclosure;
FIG. 15 schematically shows a main view of a second adjustment assembly according to an embodiment of the present disclosure;
FIG. 16 schematically shows a cross-sectional view at D-D in FIG. 15;
FIG. 17 schematically shows a top view of a second adjustment assembly according to another embodiment of the present disclosure;
FIG. 18 schematically shows a main view of a posture adjustment structure according to an embodiment of the present disclosure;
FIG. 19 schematically shows a top view of a posture adjustment structure according to an embodiment of the present disclosure;
FIG. 20 schematically shows a three-dimensional view of an object to be inspected according to some exemplary embodiments of the present disclosure;
FIG. 21 is a schematic diagram of an inspection device according to an embodiment of the present disclosure;
FIG. 22 schematically shows a schematic diagram of a radiation imaging image generated by an inspection device according to some exemplary embodiments of the present disclosure;
FIG. 23 is a flowchart of a method of acquiring feature information of an object to be inspected according to an embodiment of the present disclosure;
FIG. 24 schematically shows a block diagram of a structure of a device of acquiring feature information of an object to be inspected according to an embodiment of the present disclosure;
FIG. 25 schematically shows a block diagram of an electronic device applicable to acquire feature information of an object to be inspected according to an embodiment of the present disclosure.

### Description for reference numbers:

1. Inspection channel, 11. Protective cover,
2. Object to be inspected, 21. Inspection surface,
3. First transmission mechanism,
31. Driving device,
32. Lead screw,
33. First slide rail,
34. Sliding mechanism,
35. Second slide rail,
36. Slide groove, 4. Posture adjustment structure,
41. Supporting structure,
411. Carrying surface,
42. First adjustment assembly,
421. Chassis,
422. Rotating element,
4221. Lever,
4222. Knob,
42221. Counterweight block, 42222. Push surface, 42223. Guide surface, 42224. limiting structure,
4223. Rotating shaft,
4224. Adapter block,
42241. Screw sleeve,
4225. Bearing,
4226. Retaining ring,
4227. First driving unit,
42271. Push rod, 42272. First motor,
43. Second adjustment assembly,
431. Supporting plate,
432. Second driving unit,
4321. Second motor, 4322. Lifting rod,
433. Hinged seat,
434. Joint,
5. Second transmission mechanism,
6. Imaging system, 61. Main beam surface, 62. Scanning region.

### DETAILED DESCRIPTION OF EMBODIMENTS

Below, embodiments of the present disclosure will be described with reference to the accompanying drawings. However, it should be understood that these descriptions are only illustrative and not intended to limit the scope of the present disclosure. In the following detailed description, for ease of explanation, many specific details are elaborated to provide a comprehensive understanding of the embodiments of the present disclosure. However, it is obvious that one or more embodiments may also be implemented without these specific details. In addition, in the following explanation, descriptions of well-known structures and techniques have been omitted to avoid unnecessary confusion with the concepts of the present disclosure.

The terms used here are only intended to describe specific embodiments and are not intended to limit the present disclosure. The terms "include", "comprise", etc. used here indicate the existence of the features, steps, operations, and/or components, but do not exclude the existence or addition of one or more other features, steps, operations, or components.

In the case of using expressions such as "at least one of A, B, or C", it should generally be explained according to the meaning that those of skill in the art usually understand (for example, "a system with at least one of A, B, or C" should include but not be limited to systems with A only, B only, C only, A and B, A and C, B and C, and/or A, B and C, etc.). The terms "first" and "second" are only used for description and may not be understood as indicating or implying relative importance or implying the quantity of technical features indicated. Therefore, the features limited to "first" and "second" may explicitly or implicitly include one or more of the features.

In the embodiments of the present disclosure, unless otherwise specified, it should be understood that the use of X, Y, and Z directions to describe relative positional relationships should not be considered as limitations to the embodiments of the present disclosure. In general, the X direction may also be referred to as a first direction, the Y direction may also be referred to as a second direction, and the Z direction may also be referred to as a third direction.

In the related art, it is common to perform a comprehensive scan on the object to be inspected, and the length of coverage range of scanning is larger. In terms of detector usage, multi-row detectors are mainly used. In terms of sampling angles, the number of angles is often below 1000. In this way, in the current inspection device, a pixel size of the detector used is relatively large, with most pixel sizes in the millimeter level, which may not meet the inspection requirements in the micrometer level, that is, high resolution may not be achieved. In addition, due to insufficient inspection angles, the circumferential sampling rate is insufficient, so that it is impossible to clearly reconstruct the edge image. In addition, there are also shortcomings such as high cost and the selection of optical machines and detectors failing to meet the requirements of high-resolution CT inspection.

An embodiment of the present disclosure provides an inspection device used for scanning and inspecting an object to be inspected. The inspection device includes: an inspection channel, where the object to be inspected enters and exits the inspection device through the inspection channel; an imaging system used to scan and inspect the object to be inspected, the imaging system including a radiation source used to generate a ray, where the radiation source is disposed on one side of the inspection channel, and the ray at least forms a main beam surface applicable to scan and inspect the object to be inspected; and a detector used to receive the ray passing through the object to be inspected, where the detector is disposed on the other side of the inspection channel, to form an inspection region between the radiation source and the detector; and a posture adjustment structure disposed in the inspection region and used to adjust a posture of the object to be inspected located in the inspection region. The object to be inspected has an inspection surface. The posture adjustment structure may adjust the posture of the object to be inspected, so that the inspection surface and the main beam surface are in a same plane. In the embodiment of the present disclosure, by disposing a posture adjustment structure, the inspection surface and the main beam surface may be in the same plane, enabling high-resolution inspection of interested slices while ensuring inspection efficiency. In addition, the components of the imaging system may be adaptively adjusted according to the specific situation of the object to be inspected, providing more flexibility and selectivity. That is to say, in the embodiment of the present disclosure, a plurality of aspects such as detector selection and scanning method may be synergistically optimized to achieve inspection of the object to be inspected. In terms of inspection range, the target of inspecting the entire package is abandoned and only positioning scanning and system reconstruction are performed on specific sections of the object to be inspected, thereby achieving high-resolution inspection of interested slices while ensuring inspection efficiency.

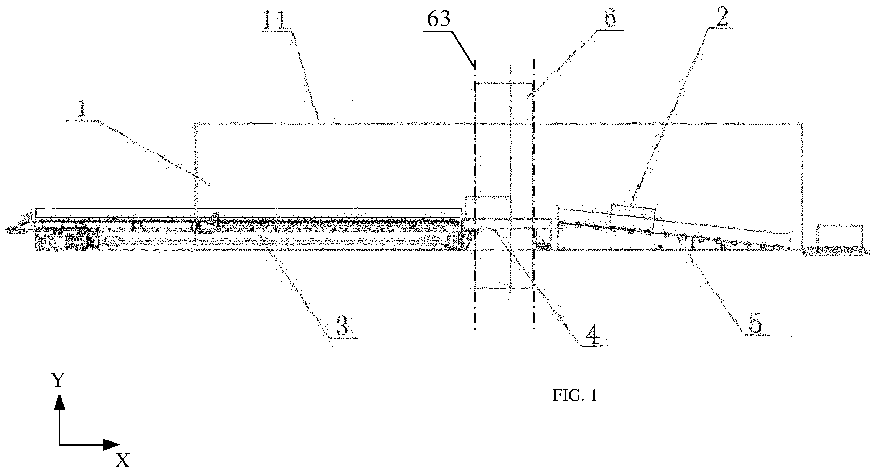

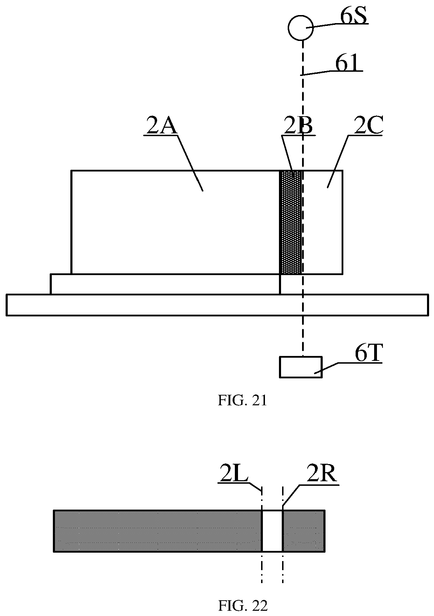

FIG. 1 is a schematic diagram of a structure of an inspection device according to an embodiment of the present disclosure. FIG. 21 is a schematic diagram of an inspection device according to an embodiment of the present disclosure. With reference to FIG. 1, FIG. 13 and FIG. 21, the inspection device is used to scan and inspect the object to be inspected 2. The inspection device provided in the embodiment of the present disclosure includes: an inspection channel 1, a first transmission mechanism 3, a posture adjustment structure 4 and an imaging system 6. For example, the object to be inspected enters and exits the inspection device through the inspection channel 1. The first transmission mechanism 3 is located on one side of the entrance of the inspection region 63, and is used to convey the object to be inspected to the inspection region. The posture adjustment structure 4 is disposed in the inspection region and is used to adjust a posture of the object to be inspected 2 located in the inspection region. The imaging system 6 is used to scan and inspect the object to be inspected. The imaging system 6 includes: a radiation source 6S used to generate a ray, where the radiation source 6S is disposed on one side of the inspection channel 1, and the ray at least forms at least a main beam surface 61 applicable to scan and inspect the object to be inspected; and a detector 6T configured to receive the ray passing through the object to be inspected, where the detector is disposed on the other side of the inspection channel 1 to form an inspection region 63 between the radiation source and the detector. The inspection region includes an entrance and an exit. The object to be inspected has an inspection surface 21. The posture adjustment structure 4 may adjust the posture of the object to be inspected 2, so that the inspection surface 21 and the main beam surface 61 are in the same plane.

Specifically, the imaging system 6 is used to scan and inspect the object to be inspected. A first transmission mechanism 3 is disposed on an entrance side of the imaging system and used to convey the object to be inspected to the imaging system. A supporting structure 43 intersects a scanning region 62 of the imaging system 6 and extends in an X direction. The supporting structure 43 has a carrying surface 411. The carrying surface 411 is applicable to place the object to be inspected 2. Under a push of the first transmission mechanism 3, the object to be inspected 2 may be pushed to slide in the X direction and pass through the imaging system 6. The first transmission mechanism 3 includes: a transmission chassis; a driving device 31 fixed on the transmission chassis; a lead screw 32 connected to the driving device, where the lead screw may be driven by the driving device; a first slide rail 33 fixed on the transmission chassis, where an extension direction of the first slide rail 33 is parallel to an extension direction of the lead screw 32; a sliding mechanism 34 connected to the lead screw, where the lead screw may drive the sliding mechanism to move, so that the sliding mechanism may push the object to be inspected 2 to slide on the first slide rail 33 and the supporting structure 43. Through the above structural design, the lead screw is used for transmission, so that the object to be inspected may be accurately positioned in the scanning region 62 of the imaging system of the inspection device, thereby effectively solving the problem of insufficient positioning accuracy of the transmission system of the inspection device and meeting the requirements of certain products for image inspection quality.

In the embodiment of the present disclosure, through the first transmission mechanism and the supporting structure, the object to be inspected is transported to a designated position, and is scanned and inspected by the imaging system. Specifically, the first transmission mechanism includes a driving device, a lead screw, a sliding mechanism, and a first slide rail, etc. Through driving the lead screw to rotate by the driving device, the rotation of the lead screw may drive the sliding mechanism to move. The object to be inspected is placed on the first slide rail, and when the sliding mechanism is driven by the lead screw, the sliding mechanism may push the object to be inspected to move on the first slide rail. The end of the first slide rail is connected to the supporting structure. One end of the supporting structure is matched with the end of the first slide rail, and the other end of the supporting structure passes through the scanning region of the imaging system. Under a driving of the driving device, the sliding mechanism may extend outside the first slide rail, thereby pushing the object to be inspected to slide on the supporting structure, accurately positioning the object to be inspected in the scanning region of the imaging system, and improving the positioning accuracy of the transmission system of the inspection device.

It should be noted that the above "designated position" refers to a position at which the part to be inspected of the object to be inspected is precisely located in the scanning region of the imaging system (i.e. a radiation main beam surface of the imaging system), which facilitates scanning and inspection. The meaning of "designated location" in the present disclosure may be understood according to the content here, which will not be further repeated.

It should also be noted that in the embodiment of the present disclosure, the first transmission mechanism and the supporting structure are sequentially arranged along a conveying direction of the object to be inspected. In this case, there may be an interval with a certain width between the first transmission mechanism and the supporting structure. It should be understood that the interval is allowed to exist, as long as the object to be inspected may smoothly pass through the interval in a process of being conveyed from the first transmission mechanism to the supporting structure.

In another embodiment of the present disclosure, the first transmission mechanism and the supporting structure may also be an integrated structure, that is, the first transmission mechanism and the supporting structure belong to different sections of a same conveying device. For example, when the above-mentioned "same conveying device" is a conveyor belt, the first transmission mechanism includes the front half of the conveyor belt, and the supporting structure includes the rear half of the conveyor belt. In this case, the object to be inspected may also be accurately positioned in the scanning region of the imaging system. It should be understood that the "conveyor belt" being taken as an example in the embodiment of the present disclosure is only for the convenience of understanding the present scheme, rather than a limitation on the conveying form of the first transmission mechanism and the supporting structure.

For example, in the embodiment of the present disclosure, the imaging system 6 may include at least one of a CT imaging system and a DR imaging system for scanning and inspecting the object to be inspected 2. For example, the CT imaging system includes structures such as a radiation source and a detector. The CT imaging is the process of scanning a layer with a certain thickness of the object to be inspected using an X-ray beam. After the X-ray passing through the layer is received by the detector and is converted into visible light, the visible light is converted into an electrical signal by a photoelectric converter, and then the electrical signal is converted into a digital signal by an analog/digital converter. After processing of a computer, a CT image is obtained. The CT imaging has high resolution and good spatial resolution, thereby obtaining a clear three-dimensional image. For example, the DR imaging system includes structures such as an electronic cassette, a scanning controller, and an image monitor. The DR imaging is to directly convert X-ray photons into a digital image through an electronic cassette, that is, obtain a DR image. The DR imaging has fast speed, low radiation, high spatial resolution and low noise rate.

In order to ensure the integrity and accuracy of the imaging, it is required to ensure that the inspection surface and the main beam surface are in the same plane. An axis parallel to the main beam surface is defined as a Z-axis, and an axis parallel to a forward direction of the object to be inspected is an X-axis. A Y-axis is defined to be perpendicular to both the X-axis and the Z-axis. The scanning region formed by the rays emitted by the radiation source is approximately conical.

In the embodiment of the present disclosure, the posture adjustment structure is used to adjust the object to be inspected 2 to a predetermined inspection position.

In the plane where the main beam surface is located, a relative position between the imaging system and the object to be inspected may be changed, so that the imaging system may scan and detect the object to be inspected at a plurality of angles.

For example, the radiation source and the detector in the imaging system are stationary. The object to be inspected rotates along the X-axis; or the radiation source and the detector in the imaging system rotate around an axis of the inspection channel, and the object to be inspected remains stationary. Alternatively, the radiation source and the detector in the imaging system rotate around the axis of the inspection channel, and the object to be inspected rotates along the X-axis.

Of course, an imaging system may include a plurality of radiation sources and a plurality of detectors. The plurality of radiation sources are disposed opposite to the plurality of detectors. The radiation sources and the detectors form source-detector assemblies. A main beam surface is formed between the source and the detector of each source-detector assembly. The main beam surfaces of the plurality of source-detector assemblies are located in the same plane.

It should be noted that one source-detector assembly at least includes one radiation source and one detector. That is to say, the source-detector assembly may be formed by one radiation source and one detector, or by one radiation source and a plurality of detectors.

The posture adjustment structure may adjust the posture of the object to be inspected, so that the inspection surface and the main beam surfaces of the plurality of source-detector assemblies are in the same plane.

In some exemplary embodiments of the present disclosure, in the plane where the main beam surface is located, the relative position between the imaging system and the object to be inspected may be changed, so that the imaging system may scan and inspect the object to be inspected at a plurality of angles.

In some exemplary embodiments of the present disclosure, in the plane where the main beam surface is located, the imaging system may rotate relative to the object to be inspected.

In some exemplary embodiments of the present disclosure, the imaging system includes a plurality of radiation sources and a plurality of detectors. The plurality of radiation sources are respectively disposed opposite to the plurality of detectors to form a plurality of source-detector assemblies. A main beam surface is formed between the source and the detector of each source-detector assembly. The main beam surfaces of the plurality of source-detector assemblies are located in the same plane. The posture adjustment structure may adjust the posture of the object to be inspected, so that the inspection surface and the main beam surfaces of the plurality of source-detector assemblies are in the same plane.

In some exemplary embodiments of the present disclosure, the posture adjustment structure may move the object to be inspected in a first direction, such that the object to be inspected has a plurality of inspection surfaces. The first direction is parallel to a conveying direction of the object to be inspected.

In some exemplary embodiments of the present disclosure, for each inspection surface, the object to be inspected may be positioned by the posture adjustment structure, so that the inspection surface and the main beam surface are in the same plane.

In some exemplary embodiments of the present disclosure, the object to be inspected includes an inspection portion. The inspection portion has the inspection surface. A ratio of an area value of a projection of the inspection portion in the first direction to a size value of the inspection portion in the first direction is greater than or equal to 10.

In some exemplary embodiments of the present disclosure, a ratio of a size of the detector in the first direction to a size of the inspection portion in the first direction is in a range of 1 to 8. That is, the detector only needs to cover the inspection portion of the object to be inspected. In this way, in the embodiment of the present disclosure, a detector with narrow width and high resolution may be selected. For example, the width of the detector (i.e. the size in the first direction) may be less than 100 mm, and the pixel size of the detector may be less than 500 um. In the embodiment of the present disclosure, a detector with narrow width and high resolution may be selected, which is beneficial for reducing costs.

In some exemplary embodiments of the present disclosure, a focus size of the radiation source is less than or equal to 1 mm. That is to say, a radiation source with a smaller focus size may be selected, so as to ensure spatial resolution.

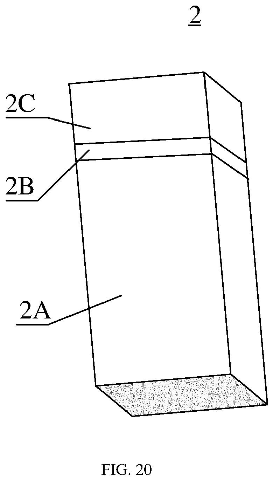

It may be understood that in the field of radiation inspection, the radiation imaging technology may image the damage inside the objects, causing it convenient for inspectors to make judgments. Among the objects to be inspected, an inspection size of the inspection region to be inspected may be relatively small. For example, in the embodiment of the present disclosure, the object to be inspected may include items such as lithium battery. In the inspecting process of the lithium battery, it is required to inspect the thin film or adhesive layer of the lithium battery, but the thickness of the thin film or adhesive layer of the lithium battery is relatively small. With reference to FIG. 20 and FIG. 21, for example, the object to be inspected 2 of the lithium battery may include a first portion 2A, an inspection potion 2B and a second portion 2C. For example, the inspection potion 2B may be a thin film or adhesive layer, which belongs to a thin layer structure. That is, the object to be inspected 2 has a "sandwich" thin layer structure, where the inspection portion 2B is a thin layer structure located in the middle, and the first portion 2A and the second portion 2C are slightly located in the front and back layers on two sides.

It should be noted that in the embodiment of the present disclosure, the thin layer structure may be understood as a thickness of the structure and a cross-sectional area of the structure are not on the same level. For example, a ratio of an area value of a projection of the thin layer structure in its thickness direction to a size value of the thin layer structure in the thickness direction is greater than or equal to 10.

The embodiment of the present disclosure provides a posture adjustment structure including: a substrate extended in the first direction, where the substrate has a carrying surface, and the carrying surface is applicable to place the object to be inspected; a first adjustment assembly disposed below the substrate. The first adjustment assembly includes a chassis that may slide relative to the substrate in the first direction; a lever that may be rotatably disposed on the chassis with the Y-axis as the rotational axis; a knob disposed on the lever, where under a driving of the lever, the knob may be abutted to the object to be inspected to drive the object to be inspected on the carrying surface to deviate around the second direction, and/or to drive the object to be inspected on the carrying surface to move in the first direction.

The posture adjustment structure provided in the embodiment of the present disclosure may be used to adjust the motion posture of the object conveyed on the manufacturing line. It may also be used in the field of radiation inspection to adjust the object to be inspected to the predetermined inspection position. When applied in the field of radiation inspection, there are at least the following scenes that require the use of the posture adjustment structure in the present disclosure, and the scene description is as follows.

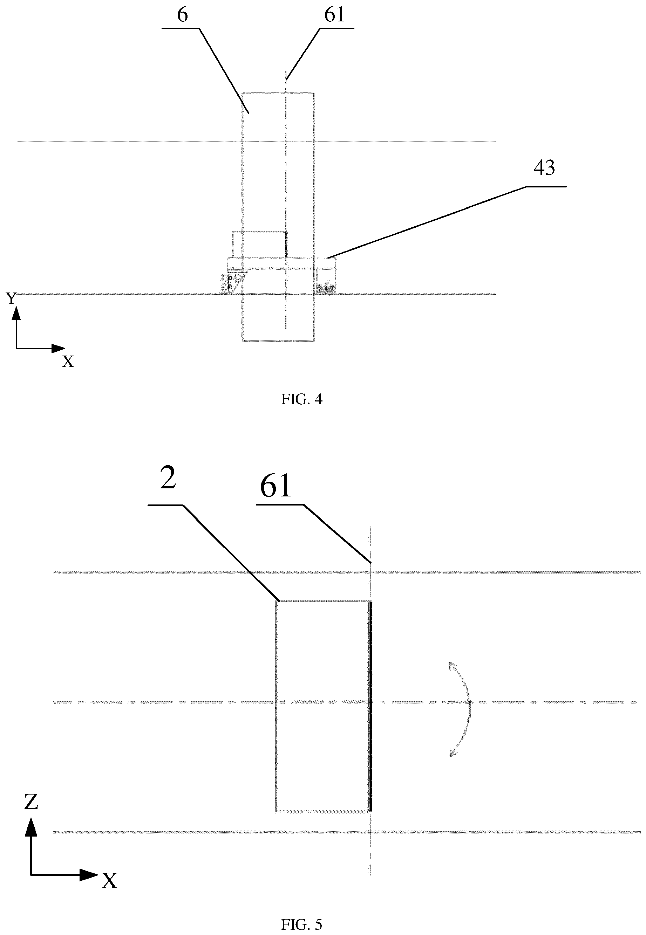

It may be understood that in the field of radiation inspection, the radiation imaging technology may image the damage inside the object, causing it convenient for inspectors to make judgments. Among the objects to be inspected, an inspection size of the inspection region to be inspected may be relatively small. For example, in the inspecting process of the lithium battery, it is required to inspect the thin film or adhesive layer of the lithium battery, but the thickness of the thin film or adhesive layer of the lithium battery is small. As shown in FIG. 4, FIG. 5, FIG. 20 and FIG. 21, the region represented by 2B in the figure is the thin film or adhesive layer mentioned above, and the axis parallel to the main beam surface 61 is defined as the Z-axis, and the axis parallel to the forward direction of the object to be inspected 2 is defined as the X-axis. The Y-axis is defined to be perpendicular to both the X-axis and Z-axis. The scanning region 62 formed by the rays emitted by the radiation source 6S is approximately conical. In actual inspecting, the inventors found that when the layer to be inspected of the thin film or adhesive layer (parallel to the inspection surface of the main beam surface) deviates in the third direction or the second direction, the layer to be inspected deviates from the scanning region by being affected by the shape of the scanning region. When the layer to be inspected deviates from the scanning region, a part of the layer to be inspected may not be inspected, thereby leading to inspection misalignment.

In the embodiment of the present disclosure, for the object to be inspected with a thin layer structure, accurate positioning is performed on the thin layer to be inspected to achieve the positioning of the thin layer to be inspected in the main beam surface. It is possible to perform scanning and inspection on the specified thin layer, such as circular rail scanning. In the imaging process, it may ensure that the ray only passes through the central layer (i.e. the thin layer structure 2B), or as little as possible passes through the front and back layers, improving image accuracy.

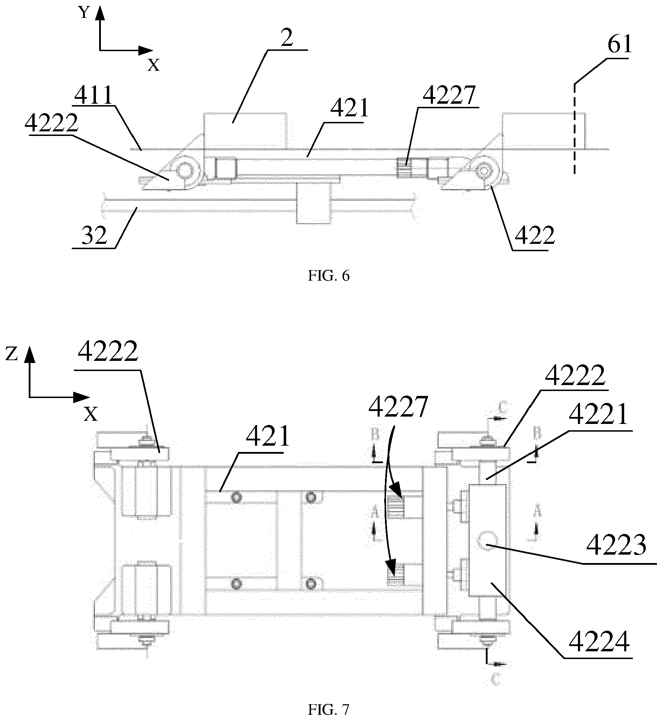

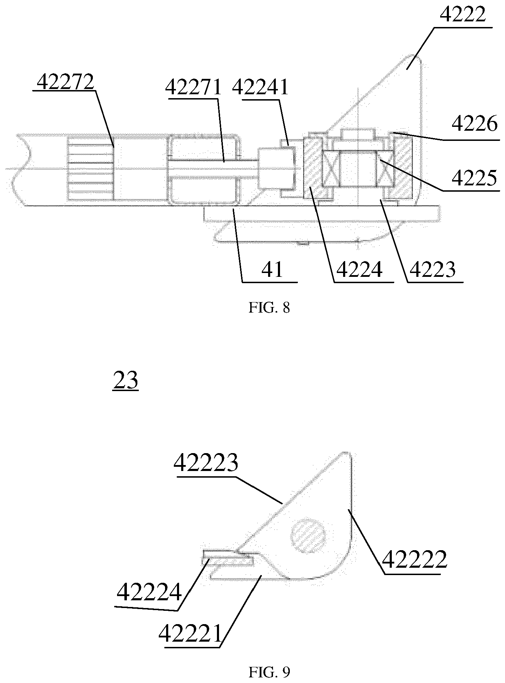

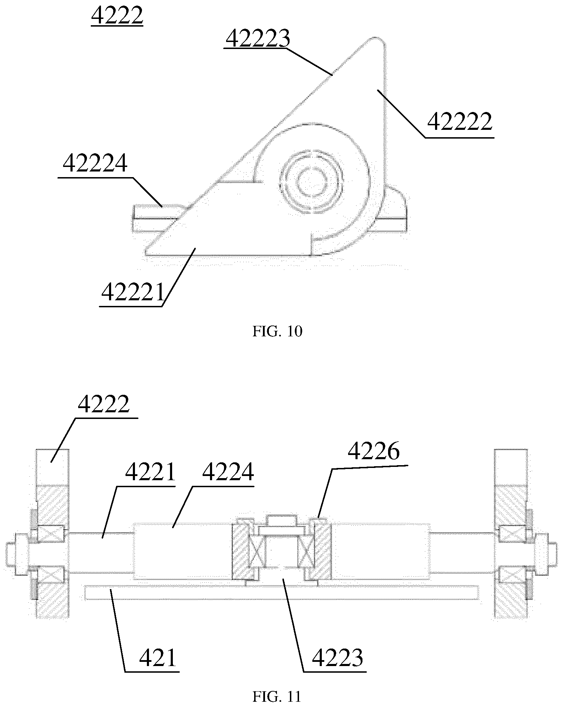

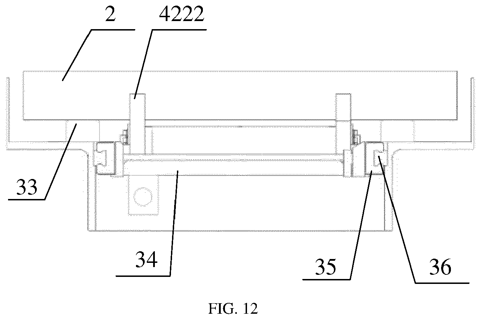

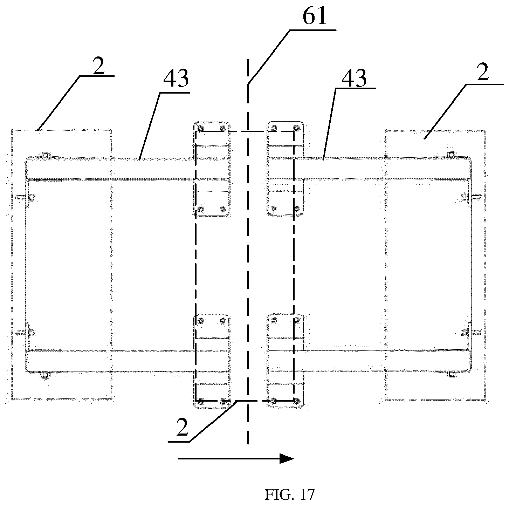

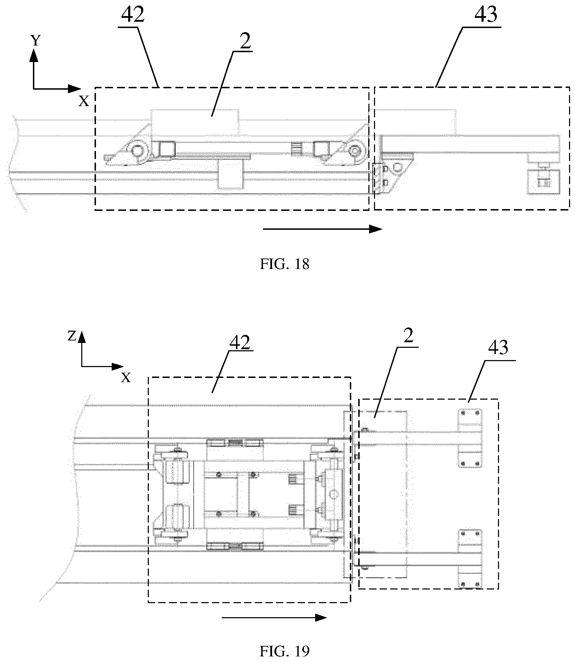

For example, with reference to FIG. 6 to FIG. 19, the posture adjustment structure 4 includes: a first adjustment assembly 42 disposed on the first transmission mechanism 3. The first adjustment assembly 42 includes: a lever 4221 rotatably disposed on the chassis 421 with the Y-axis as the rotation axis; a knob 4222 disposed on the lever 4221, where under the driving of the lever 4221, the knob 4222 may be abutted to the object to be inspected 2 to drive the object to be inspected 2 on the carrying surface 411 to deviate around the Y direction, and/or to drive the object to be inspected 2 on the carrying surface 411 to move in the X direction.

In the embodiment of the present disclosure, the supporting structure 41 is arranged along the X direction. The plurality of objects to be inspected 2 may be placed at intervals on the carrying surface 411 of the supporting structure 41. The supporting structure 41 may be a common manufacturing conveyor line, such as a manufacturing operation platform, a placement pipeline, etc.

The supporting structure 41 is designed as a pipeline type supporting frame, which includes two frames disposed opposite to each other. The first adjustment assembly is disposed between the two frames. The cross-sectional shape of the two frames is L-shaped, so they include a horizontal supporting arm and a vertical supporting arm. A supporting rail is mounted on the horizontal supporting arm. The upper surface of the supporting rail is configured as the carrying surface 411. The object to be inspected 2 spans the two supporting rails and is supported by the carrying surface 411 of the supporting rail, achieving the function of placing the object to be inspected 2.

The object to be inspected 2 in the embodiment of the present disclosure may be a lithium battery. When the lithium battery is placed on the carrying surface 411, it is required to ensure that the plane where the thickness of its adhesive layer or thin film layer is located is provided towards the radiation source of the imaging system 6.

In the embodiment of the present disclosure, the first adjustment assembly 42 further includes a rotating element 422. The rotating element 422 is rotatably disposed on the chassis 421 with the Y-axis as the rotation axis. Under the driving of external force, the rotating element 422 is used to drive the object to be inspected 2 on the carrying surface 411 to deviate around the Y direction. Under the driving of the chassis 421, the rotating element 422 may drive the object to be inspected 2 to move in the X direction.

It may be understood that the structure of the rotating element 422 may be various. The rotating element 422 in the embodiment of the present disclosure is in a form of a combination of the lever 4221 and the knob 4222. The specific structure is as follows.

The lever 4221 is mounted on the chassis 421. The lever 4221 may be rotatably disposed on the chassis 421 with the Y-axis as the rotational axis. On the chassis 421, a rotating shaft 4223 is disposed along the Y direction. The rotating shaft 4223 is fixed on the chassis 421. Furthermore, the chassis 421 has a framework horizontally placed between the frames. The rotating shaft 4223 is disposed at the center of the upper end surface of the frame. Disposing at the center may ensure that the length of the rotating arm of the lever 4221 disposed on the rotating shaft 4223 remains consistent, facilitating subsequent adjustment of the deviation angle.

It may be understood that for disposing the lever 4221 rotatably on the rotating shaft 4223, in the embodiment of the present disclosure, the lever 4221 is disposed on an adapter block 4224, and two levers 4221 are respectively disposed opposite to each other on the adapter block 4224. The middle position of the adapter block 4224 is machined with a mounting hole, which is embedded with a bearing 4225 and a retaining ring 4226 that restricts the bearing 4225 from coming out of the mounting hole. The rotating shaft 4223 is mounted in the bearing 4225, so as to enable the adapter block 4224 to rotate around the rotating shaft 4223 and drive the lever 4221 to rotate around the Y direction.

The first adjustment assembly 42 in the embodiment of the present disclosure further includes a knob 4222. The knob 4222 is disposed on the lever 4221. Under the driving of the lever 4221, the knob 4222 may be abutted to the object to be inspected 2 to drive the object to be inspected 2 on the carrying surface 411 to deviate around the Y direction, and to drive the object to be inspected 2 on the carrying surface 411 to move in the X direction.

In the embodiment of the present disclosure, knobs 4222 are mounted at ends of two lever 4221. The knob 4222 protrudes from the carrying surface 411 and may be abutted on the end surface of the object to be inspected 2 facing away from a movement direction when the chassis 421 moves. In order to achieve deflection of the object to be inspected 2, the abutting position of the knob 4222 deviates from the center position of the end surface.

It may be understood that the process of which the knob 4222 drives the object to be inspected 2 on the carrying surface 411 to deviate around the Y direction is as follows. When the chassis 421 is driven by an external force to move to the object to be inspected 2, if it is inspected that the object to be inspected 2 has deviated around the Y direction, the adapter block 4224 rotates, driving the lever 4221 to rotate, causing the knob 4222 on the lever 4221 to act on the object to be inspected 2. The knob 4222 pushes the object to be inspected 2 to rotate, achieving correction of the deviation of the object to be inspected 2. The method for inspecting whether the object to be inspected 2 has deviated around the Y direction may be determined by inspecting the spatial position coordinates of the current object to be inspected 2 through a position sensor to determine whether it has deviated. It may also be determined by the inspection result of the previous object to be inspected. If the inspection result shows that the previous object to be inspected has deviated, it is needed to perform a deviation adjustment on the current object to be inspected.

It may be understood that after the deviation correction of the object to be inspected 2 is completed, when the chassis 421 continues to move in the X direction, the knob 4222 may push the object to be inspected 2 to move in the X direction and enter the next inspection step.

It may be understood that in some embodiments, under the driving of the lever 4221, the knob 4222 may only be abutted to the object to be inspected 2 to drive the object to be inspected 2 on the carrying surface 411 to deviate around the Y direction. The movement of object to be inspected 2 in the X direction may be driven by other structures.

It may be understood that in some embodiments, the rotating element 422 may also be a combination of a turntable and a lifting structure. Specifically, the turntable is mounted on the lifting structure. Under a driving of the lifting structure, the turntable may perform a lifting and lowering motion in the Y direction. When the turntable rises, it may undertake the object to be inspected 2 on the supporting structure 41. The turntable may be rotatably disposed on the lifting structure at the same time. Under the driving of the external force, the turntable may undertake the object to be inspected 2 to rotate around the Y direction. Furthermore, the lifting structure is fixed on chassis 421. Under the driving of the chassis 421, the turntable may also move in the X direction, thereby achieving adjustment of the deviation of the object to be inspected 2 around the Y direction.

With reference to FIG. 6 to FIG. 12, in the embodiment of the present disclosure, the first adjustment assembly 42 further includes a first driving unit 4227. The first driving unit 4227 is used to push the adapter block 4224 to rotate. Specifically, the first driving unit 4227 has a push rod 42271 that may move towards or away from the adapter block 4224, and a first motor 42272. One end of the push rod 42271 is flexibly connected to the adapter block 4224, and the other end of the push rod 42271 is connected to the first motor 42272. In order to ensure that the push rod 42271 may push the adapter block 4224 to rotate around the rotating shaft 4223, the push rod 42271 needs to be connected to one end of the adapter block 4224 away from the rotating shaft 4223 to form a rotational torque when pushing.

The first motor 42272 is mounted on the chassis 421, and the rotation of the first motor 42272 drives the rotation of the push rod 42271. A screw sleeve 42241 is mounted on the end face of the adapter block 4224 facing the push rod 42271. The push rod 42271 is provided with a threaded segment that matches with the screw sleeve 42241. When the push rod 42271 rotates, the threaded segment rotates inside the screw sleeve 42241, driving the adapter block 4224 to rotate.

It may be understood that in the embodiment of the present disclosure, there are two sets of first driving units 4227, which are symmetrically arranged with respect to the rotating shaft 4223. When the two sets of first driving units 4227 drive the lever 4221 to rotate, the push rod 42271 of one first driving unit 4227 moves towards the lever 4221, while the push rod 42271 of the other one first driving unit 4227 moves away from the lever 4221.

It may be understood that in some other embodiments, the number of first driving unit 4227 may be one. When the number of the first driving unit 4227 is one, the push rod 42271 and the adapter block 4224 may be adjusted by a universal joint in conjunction with a telescopic rod to achieve a reciprocating swing of the lever 4221 around the Y direction.

It may be understood that in some embodiments, the number of knobs 4222 mounted on the lever 4221 may be more than one to be applicable to adjust the stirring position.

As mentioned above, in the embodiment of the present disclosure, when the chassis 421 is moved, it has the function of pushing the object to be inspected 2 in the X direction through the knob 4222, and the objects to be inspected 2 are placed on the supporting structure 41 at intervals. When the chassis 421 drives the previous object to be inspected 2 in the X direction to move to the next process, the chassis 421 may be driven to move backwards and the knob 4222 may be abutted to the end face of the object to be inspected 2 facing away from a movement direction to push the object to be inspected 2 to move in the X direction. In order to achieve continuous conveying of the objects to be inspected 2 on the supporting structure 41 by the first adjustment assembly 42, the knob 4222 needs to be rotatably disposed on the lever 4221 in the embodiment of the present disclosure, and the knob 4222 may rotate around an axis direction of the lever 4221. The knob 4222 is configured as an eccentric structure, where the knob 4222 has a first position at which the knob 4222 protrudes from the carrying surface 411 under the driving of an eccentric force and a second position at which the knob 4222 flips below the carrying surface 411 under an action of the external force. When the chassis 421 moves in the X direction, the knob 4222 is used to push the object to be inspected 2 to move in the X direction with the knob 4222 being in the first position.

The knob 4222 has a push surface 42222, applicable to be abutted to the object to be inspected 2; and a guide surface 42223 disposed at an angle with the push surface 42222, applicable to accept the external force. In this embodiment, the knob 4222 is in a shape of a right angled triangle. The push surface 42222 is equivalent to the plane where the right-angled side is located, and the guide surface 42223 is equivalent to the plane where the hypotenuse is located. The limiting structure 42224 is used to limit the rotation of the knob 4222 when the knob 4222 moves to the first position. When the chassis 421 moves in the negative direction along the X-axis, the guide surface 42223 collides with the object to be inspected 2 to drive the knob 4222 to move to the second position. The limiting structure 42224 is a limiting block disposed at the guide surface 42223 and protruding from the guide surface 42223.

In order to ensure that the center of the knob 4222 does not coincide with the rotation center, a counterweight block 42221 is mounted on the knob 4222 to adjust an eccentricity of the knob 4222, so as to achieve the parallel disposing of the push surface 42222 and the YZ plane at the first position. The parallel disposing of the push surface 42222 and the YZ plane may ensure that when the push surface 42222 pushes the object to be inspected 2, the push surface 42222 adheres to the object to be inspected 2, thereby ensuring the object to be inspected 2 to smoothly move on the carrying surface 411.

In the embodiment of the present disclosure, the incoming material method of the object to be inspected 2 is to transfer one object to be inspected 2 at the incoming point of the supporting structure 41 every certain interval of time. However, a distance between the incoming material point of the object to be inspected 2 and the scanning region is relatively large, resulting in a larger forward or backward travel of the chassis 421 between the incoming material point and the scanning region, which increases the transmission time for the object to be inspected 2. In order to solve the above problems, in the embodiment of the present disclosure, a knob 4222 is rotatably disposed at one end of the chassis 421 away from the first adjustment assembly 42. The knob 4222 is disposed at an interval with the knob 4222 of the first assembly in the X direction. The distance of the above interval may be half of the distance between the incoming material point and the scanning region. When the chassis 421 retreats by an interval distance and moves forward again, two objects to be inspected 2 may be driven to move forward at one time, improving the transferring efficiency of the object to be inspected 2.

It may be understood that for the object to be inspected 2, when there are a plurality of incoming materials, a plurality of knobs 4222 may be adaptively disposed in the X direction to improve the transferring efficiency of the object to be inspected 2.

As mentioned above, in the inspected layer of the thin film or adhesive layer, there is an inspection surface 21 parallel to the main beam surface 61. When the deviation occurs in the Z direction, the inspected layer also has a deviation out of the scanning region due to the shape of the scanning region. Based on this, the embodiment of the present disclosure further includes a second adjustment assembly 43. When the object to be inspected 2 completes its deviation correction on the first adjustment assembly 42 around the Y direction, the object to be inspected 2 enters the second adjustment assembly 43 under the pushing of the knob 4222.

In the embodiment of the present disclosure, the inspection device further includes a second slide rail 35. The second slide rail 35 is fixed on the chassis 421. The second slide rail 35 is used to support the sliding mechanism 34. The sliding mechanism 34 is provided with a slide groove 36 for matching with the second slide rail 35. The sliding mechanism 34 may slide on the second slide rail 35 through the slide groove 36. At the same time, the cooperation between the slide groove 36 and the second slide rail 35 played a supporting role for the sliding mechanism 34, increasing the stability of the sliding mechanism 34 when moving. Moreover, an extension direction of the second slide rail 35 is parallel to an extension direction of the lead screw 32. When the lead screw 32 drives the sliding mechanism 34 to move, the second slide rail 35 may cooperate with the lead screw 32 to guide the movement direction of the sliding mechanism 34, ensuring that the direction in which the sliding mechanism 34 pushes the object to be inspected 2 to move does not deviate. For example, the second slide rail 35 may be a straight guide rail parallel to the extension direction of the lead screw 32.

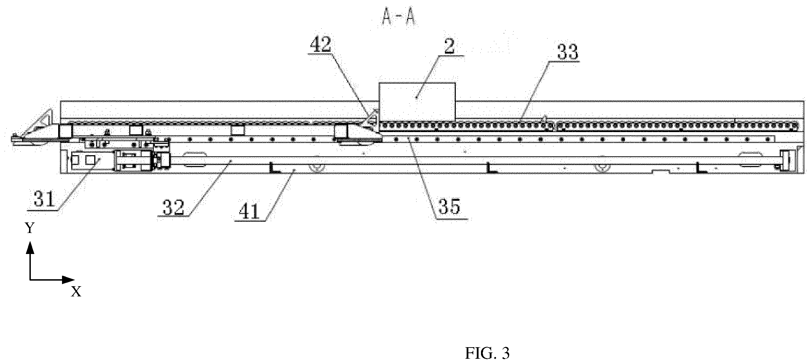

As shown in FIG. 3, the chassis 421 is a square-shaped frame structure, with two frame edges opposite to each other mounted with the slide grooves 36, respectively. The second slide rail 35 is mounted on an inner side of a vertical wall of the supporting structure 41. The slide groove 36 may be slidably disposed on the second slide rail 35. Under the driving of the external force, the chassis 421 moves relative to the supporting structure 41 in the X direction.

It may be understood that the external force may be driven by human labor, electric drive, hydraulic drive, pneumatic drive, and other methods.

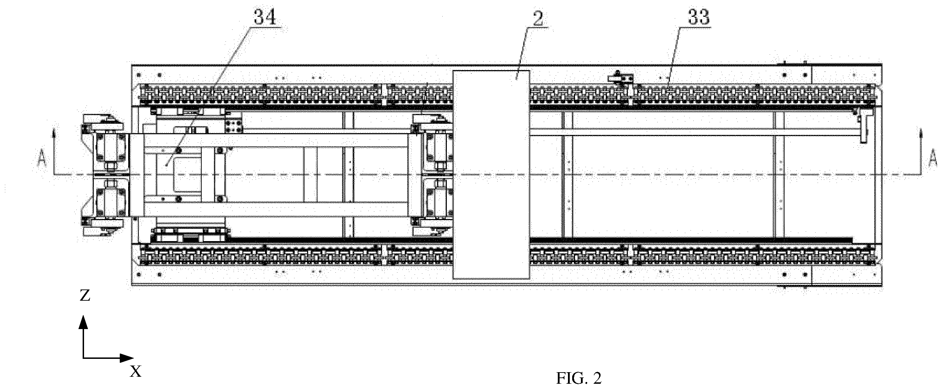

Optionally, in the embodiment of the present disclosure, as shown in FIG. 2 and FIG. 3, two first slide rails 33 and two second slide rails 35 are provided, and are respectively arranged on two sides of the sliding mechanism 34. By using multi-point support, the stability of the sliding mechanism 34 and the movement of the object to be inspected 2 may be increased. However, it should be understood that the number of the first slide rails 33 and the second slide rails 35 in the embodiment of the present disclosure is not limited to this, and may further cases may be included where there are a plurality of first slide rails 33 and/or a plurality of second slide rails 35.

In some exemplary embodiments, the driving device 31 includes a servo motor. The servo motor may convert voltage signals into torque and speed to drive and control the object. The rotor speed of the servo motor is controlled by input signals and the servo motor may react quickly. In an automatic control system, the received electrical signals may be converted into angular displacement or angular velocity output on the motor shaft, and the accuracy of its control position is very high. One end of the lead screw 32 is connected to an output terminal of the servo motor, the other end of the lead screw 32 is connected to the chassis 421, and the lead screw 32 may rotate relative to the chassis 421 with the central axis of the lead screw 32 as the rotating shaft 4223.

The forward and reverse rotation of the servo motor may drive the lead screw 32 to drive the sliding mechanism 34 to reciprocally move along the second slide rail 35, achieving the transportation of the object to be inspected in batches.

In the embodiment of the present disclosure, at least one first adjustment assembly 42 is provided on the sliding mechanism 34. When the sliding mechanism 34 moves in the extension direction of the lead screw 32, the first adjustment assembly 42 may move with the sliding mechanism 34, while pushing the object to be inspected 2 to move on the first slide rail 33.

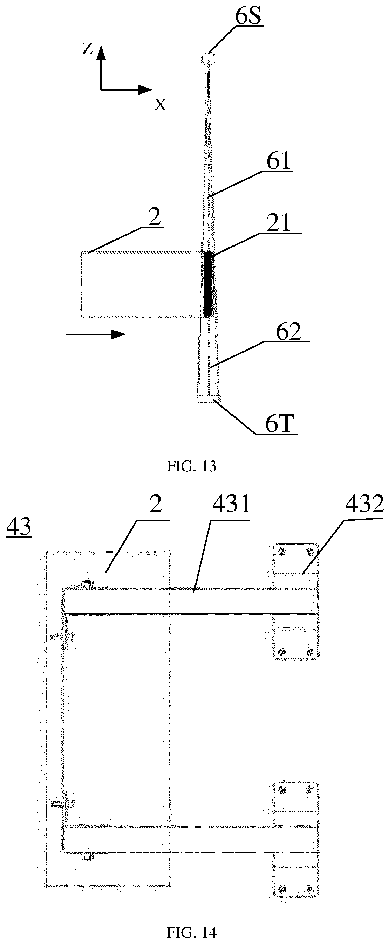

Moreover, a distance between a position, at which the sliding mechanism 34 is connected to the lead screw 32, and the first adjustment assembly 42 should not be less than a length of the supporting structure 41, so that when the object to be inspected 2 is conveyed from the first slide rail 33 to the supporting structure 41, one end of the push assembly disposed on the sliding mechanism 34 may protrude from the second slide rail 35, thereby continuing to push the object to be inspected 2 to slide on the supporting structure 41 until the object to be inspected 2 passes through the scanning region 62 of the imaging system 6, and ultimately comes out from the outlet side of the imaging system 6, as shown in FIG. 13.

With reference to FIG. 14, FIG. 18 and FIG. 19, the second adjustment assembly 43 is disposed on the supporting structure 41. The second adjustment assembly 43 includes: a supporting plate 431 rotatably disposed on the supporting structure 41 with the Z axis as the rotating axis, and the supporting plate 431 is applicable to undertake the object to be inspected 2. In the embodiment of the present disclosure, the supporting plate 431 is a supporting beam structure. In order to achieve a stable support for the object to be inspected 2, the number of the supporting plates 431 is two, the two supporting plates 431 are disposed on the supporting structure 41 in a hinged manner, respectively. The horizontal supporting arms of the two frames of the supporting structure 41 are provided with a hinged seat 433 respectively to achieve the connection with the supporting plate 431.

One end of the supporting plate 431 close to the first adjustment assembly 42 is hinged on the supporting structure 41. In order to ensure that the object to be inspected 2 moves smoothly from the first adjustment assembly 42 to the second adjustment assembly 43, it may be controlled that the height of the carrying surface 411 is higher than the upper surface of the supporting plate 431 in the Y direction.

In order to drive the rotation of the supporting plate 431, the second adjustment assembly 43 further includes: a second driving unit 432, disposed on the supporting structure 41 and arranged away from the hinged end below the supporting plate 431, for driving the rotation of the supporting plate 431.

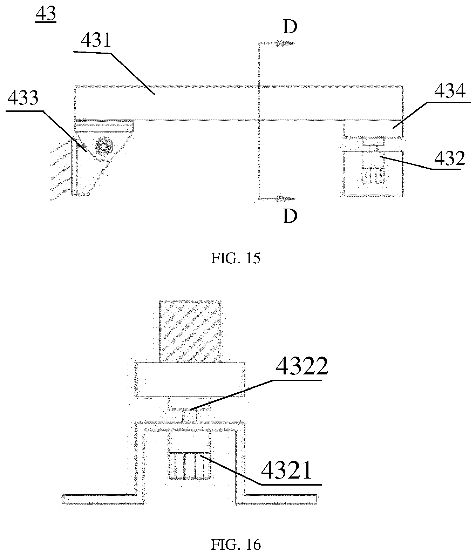

As shown in FIG. 15 and FIG. 16, the second driving unit 432 includes: a second motor 4321 disposed on the supporting structure 41; and a lifting rod 4322 disposed on a motor shaft of the second motor 4321, where one end of the lifting rod 4322 is connected to the supporting plate 431. The second motor 4321 drives the lifting rod 4322 to rotate through a coupling, and one end of the lifting rod 4322 is connected to a joint 434 disposed on the lower end face of the supporting plate 431. The lifting rod 4322 may be screwed to the joint 434. With the forward and reverse rotation of the second motor 4321, the forward and reverse rotation of the lifting rod 4322 may be achieved, thereby driving the supporting plate 431 to rotate clockwise or counterclockwise around a hinged axis.

It may be understood that the driving forms of the second driving unit 432 may be various, and in some embodiments, common push rod 42271 motor driving, cylinder telescopic driving, etc. are used.

The object to be inspected 2 placed on the carrying surface 411 is driven by the knob 4222 under the action of the lever 4221 of the first adjustment assembly 42 to complete the deviation adjustment around the Y direction. Then, under the driving of the chassis 421, the movement of the object to be inspected 2 in the X direction is completed through a push by the lever 4222, and the object to be inspected 2 enters the second adjustment assembly 43. Under the driving of the supporting plate 431 in the second adjustment assembly 43, the deviation adjustment around the Z direction is completed, thereby completing the posture adjustment of the object to be inspected 2 and entering the next step of the radiation imaging process.

It should be noted that the rays in radiation imaging are prone to attenuation when passing through metal objects. Therefore, the supporting plate 431 and other structures in the second adjustment assembly 43 in this embodiment are preferably made of carbon fiber material.

It should be noted that the inventor found in actual manufacturing that the stiffness of the support made of carbon fiber is average. After multiple uses, the supporting plate 431 is prone to bending deformation. When different types of object to be inspected 2 are placed on the supporting plate 431, the degree of bending deformation of the supporting plate 431 varies with the influence by the weight change of the object to be inspected 2. Therefore, it is needed to adjust the rotation angle of the supporting plate 431 each time, which increases the operation process. Based on this, another implementation scheme of the second adjustment assembly 43 is provided in the present disclosure.

In the X direction, two sets of second adjustment assemblies 43 are spaced apart. When performing radiation imaging, the scanning region 62 of the radiation imaging is exactly in the interval region of the two sets of second adjustment assemblies 43 are spaced apart. This disposing ensures that the supporting plate 431 uses a more rigid metal without causing attenuation of the radiation.

In the embodiment of the present disclosure, the conveying system used for the inspection device may further include a second transmission mechanism 5. The second transmission mechanism 5 is located on an exit side of the imaging system 6 and is matched with and connected to the supporting structure 41. The second transmission mechanism 5 is used to convey the object to be inspected 2 from the supporting structure 41. After the inspection of the imaging system 6, the object to be inspected 2 is conveyed to the waiting region through the second transmission mechanism 5, waiting for the subsequent process. Moreover, by disposing the second transmission mechanism 5, the object to be inspected 2 may be conveyed to a position away from the imaging system 6, thereby avoiding radiation effects when the object to be inspected 2 is taken out.

It should be noted that a connection relationship between the supporting structure 41 and the second transmission mechanism 5 is similar to a connection relationship between the first transmission mechanism 3 and the supporting structure 41. The connection relationship between the first transmission mechanism 3 and the supporting structure 41 has already been detailed in the previous text, which will not be repeated here.

Optionally, in the embodiment of the present disclosure, the conveying method of the second transmission mechanism 5 includes unpowered conveying. That is to say, after being conveyed to the second transmission mechanism 5 by the supporting structure 41, the object to be inspected 2 may slide along the second transmission mechanism 5 under its own gravity, achieving the conveying of the object to be inspected 2. The conveying cost of this unpowered conveying method is relatively low, and it may ensure the normal conveying of the object to be inspected 2.

For example, the second transmission mechanism 5 may be an unpowered drum conveyor. The drum conveyor is inclined and provided with a plurality of freely rotating drums. After the object to be inspected 2 is conveyed from the supporting structure 41 to the drum conveyor, the object to be inspected 2 slides to the bottom of the drum conveyor using the drum on the drum conveyor, completing the conveying process of the object to be inspected 2.

Optionally, in the embodiment of the present disclosure, the conveying method of the second transmission mechanism 5 may further include a power conveying method. The use of power conveying method results in longer conveying distance, more stable conveying process, and higher conveying efficiency. For example, the conveying method of the second transmission mechanism 5 may be various forms such as belt conveyor conveying, power roller conveying, synchronous belt conveying, or the lead screw 32 conveying.

In the embodiment of the present disclosure, protective covers 11 are provided on both the entrance side and the exit side of the imaging system 6. The protective covers 11 are used to shield the radiation rays of the imaging system 6. Moreover, the protective covers 11 are located outside the first transmission mechanism 3, the supporting structure 41 and the second transmission mechanism 5, which may greatly isolate the radiation of scanning and inspection rays, and have a good radiation protection effect.

Furthermore, in the embodiment of the present disclosure, the protective cover 11 is formed of bending sheet metal. An outer surface of the protective cover 11 is provided with a lead layer to enhance the radiation shielding effect.

The working principle of the conveying system used for the inspection device in the embodiment of the present disclosure is that the first transmission mechanism 3, the supporting structure 41 and the second transmission mechanism 5 are all disposed inside the protective cover 11, which may weaken the radiation of the imaging system 6. In the first transmission mechanism 3, the servo motor drives the lead screw 32 to drive the sliding mechanism 34 to move along the second slide rail 35. The first adjustment assembly 42 is mounted on the sliding mechanism 34. The first adjustment assembly 42 pushes the object to be inspected 2 on the first slide rail 33 to move to the supporting structure 41, and slides along the supporting structure 41 to the scanning region 62 of the imaging system 6, and the object to be inspected 2 is inspected by the imaging system 6. After the inspection of the object to be inspected 2 is completed, the object to be inspected 2 is moved out of the protective cover 11 along the second transmission mechanism 5.

It should be noted that the conveying system used for the inspection device in the embodiment of the present disclosure is applicable to the security inspection field, especially applicable to inspecting certain products that require high image inspection quality. For example, ultra-thin layers such as adhesive layers and thin films of batteries may be precise positioned, so as to obtain high-quality inspection images. It should be understood that the inspection object of the conveying system in the embodiment of the present disclosure is not limited to the field of battery.

In the embodiment of the present disclosure, the object to be inspected 2 may be controlled to be positioned in the scanning region, and after the interested slice region arrives to the scanning region, the imaging system may be controlled to collect data from the interested slice. In the method of data collection, the object may not move, and the complete circular rail data is collected, or the object slowly moves, and the complete spiral rail data is collected. After the collection of interested slices is completed, data reconstruction is performed. The posture adjustment structure may quickly adjust the object to be inspected 2 to a next interested slice. After the next interested slice arrives to the scanning region, the imaging system is controlled to collect data from the next interested slice. In this way, the entire scanning process for all interested slices of the object to be inspected is completed. Therefore, in the embodiment of the present disclosure, high-resolution inspection of the interested slices may be achieved while ensuring the inspection efficiency. In addition, the components of the imaging system may be adaptively adjusted according to the specific situation of the object to be inspected, providing more flexibility and selectivity.

In the embodiment of the present disclosure, the posture of the object to be inspected may be acquired first, and then the posture of the object to be inspected may be adjusted, so as to achieve the automatic positioning and scanning process of the thin layer. Specifically, the imaging system 6 may be used to scan the object to be inspected 2 to acquire a first image of object to be inspected 2. By analyzing the first image, the posture of the object to be inspected 2 may be acquired. Based on the inspected posture of the object to be inspected 2, the posture adjustment structure may be controlled to adjust the posture of the object to be inspected 2, so that the inspection surface of the object to be inspected 2 and the main beam surface of the imaging system 6 are in the same plane. Then, the imaging system 6 is controlled to perform radiation scanning on the object to be inspected 2 to acquire a second image of the object to be inspected 2. For example, the second image may be a slice image of the object to be inspected 2.

In some embodiments, an additional imaging system may be used to scan the object to be inspected 2 to acquire the first image of the object to be inspected 2. For example, this additional imaging system may be a CT imaging system, a DR imaging system, or a visible light imaging system.

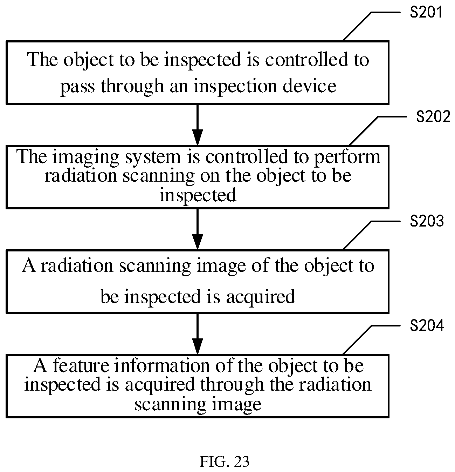

According to another aspect, the embodiment of the present disclosure provides a method of acquiring a feature information of an object to be inspected, as shown in FIG. 23. The method includes the following steps.

In step S201, the object to be inspected is controlled to pass through an inspection device, where the inspection device is used for scanning and inspecting the object to be inspected. The inspection device includes an inspection channel, where the object to be inspected enters and exits the inspection device in a first direction through the inspection channel; and an imaging system used for scanning and inspecting the object to be inspected.

In step S202, the imaging system is controlled to perform radiation scanning on the object to be inspected.

In step S203, a radiation scanning image of the object to be inspected is acquired.

In step S204, a feature information of the object to be inspected is acquired through the radiation scanning image.

For example, the object to be inspected 2 includes a first portion 2A, an inspection portion 2B and a second portion 2C. In a process of controlling the imaging system to perform radiation scanning on the object to be inspected, the inspection portion is located between the first portion and the second portion in the first direction.

For example, with reference to FIG. 22, the feature information of the object to be inspected is acquired through the radiation scanning image, includes: acquiring a first boundary line 2L between the inspection portion and the first portion and a second boundary line 2R between the inspection portion and the second portion, by the radiation scanning image; and calculating a size between the first boundary line 2L and the second boundary line 2R in the first direction, so as to acquire a size of the inspection portion in the first direction.

According to some exemplary embodiments, the method further includes: acquiring a volume of the inspection portion.

Acquiring the feature information of the object to be inspected through the radiation scanning image further includes: acquiring an area of a projection of the inspection portion in the first direction, based on the volume of the inspection portion and the size of the inspection portion in the first direction.

According to some exemplary embodiments, the method further includes: acquiring a shape feature information of the projection of the inspection portion in the first direction.

Acquiring the feature information of the object to be inspected through the radiation scanning image further includes: acquiring a feature information of a cross-section of the inspection portion perpendicular to the first direction, based on the area of the projection of the inspection portion in the first direction and the shape feature information of the projection of the inspection portion in the first direction.

According to some exemplary embodiments, the attenuation characteristics of each of the first portion and the second portion for rays emitted by the imaging system are different from the attenuation characteristics of the inspection portion for rays emitted by the imaging system.

According to some exemplary embodiments, in the radiation scanning image, the gray scale of each of the first portion and the second portion is different from the gray scale of the inspection potion. Acquiring the first boundary line between the inspection portion and the first portion and the second boundary line between the inspection portion and the second portion by the radiation scanning image, includes: determining the first boundary line according to a difference between the gray scale of the inspection portion and the gray scale of the first portion shown in the radiation scanning image; and determining the second boundary line according to the difference between the gray scale of the inspection portion and the gray scale of the second portion shown in the radiation scanning image.

For example, the shape of the projection of the inspection portion in the first direction is circular. Acquiring the feature information of the cross-section of the inspection portion perpendicular to the first direction based on the area of the projection of the inspection portion in the first direction and the shape feature information of the projection of the inspection portion in the first direction, specifically includes: acquiring a radius of the cross-section of the inspection portion perpendicular to the first direction using an equation for calculating the area of a circle, according to the area of the projection of the inspection portion in the first direction.

For example, the shape of the projection of the inspection portion in the first direction is a square. Acquiring the feature information of the cross-section of the inspection portion perpendicular to the first direction based on the area of the projection of the inspection portion in the first direction and the shape feature information of the projection of the inspection portion in the first direction, specifically includes: acquiring a side length of the cross-section of the inspection portion perpendicular to the first direction using an equation for calculating the area of a square, according to the area of the projection of the inspection portion in the first direction.

According to some exemplary embodiments, the inspection device further includes a posture adjustment structure. The posture adjustment structure is disposed in the inspection channel and is used for adjusting the posture of the object to be inspected located in the inspection channel.

Controlling the imaging system to perform radiation scanning on the object to be inspected includes: controlling the object to be inspected to move in the inspection channel in the first direction under the driving of the posture adjustment structure; and controlling the imaging system to continuously emit beams to continuously perform radiation scanning on the object to be inspected in the movement process of the object to be inspected.

According to some exemplary embodiments, the imaging system includes a radiation source used to generate a ray. The radiation source is disposed on a side of the inspection channel. The ray at least forms a main beam surface applicable to scan and inspect the object to be inspected.

Controlling the imaging system to perform radiation scanning on the object to be inspected further includes: adjusting the posture of the object to be inspected, so that the surface to be inspected of the object to be inspected and the main beam surface are in the same plane in the radiation scanning process.

For example, a ratio of an area value of a projection of the inspection portion in the first direction to a size value of the inspection portion in the first direction is greater than or equal to 10.

For example, a ratio of a size of the detector in the first direction to a size of the inspection portion in the first direction is in a range of 1 to 8.

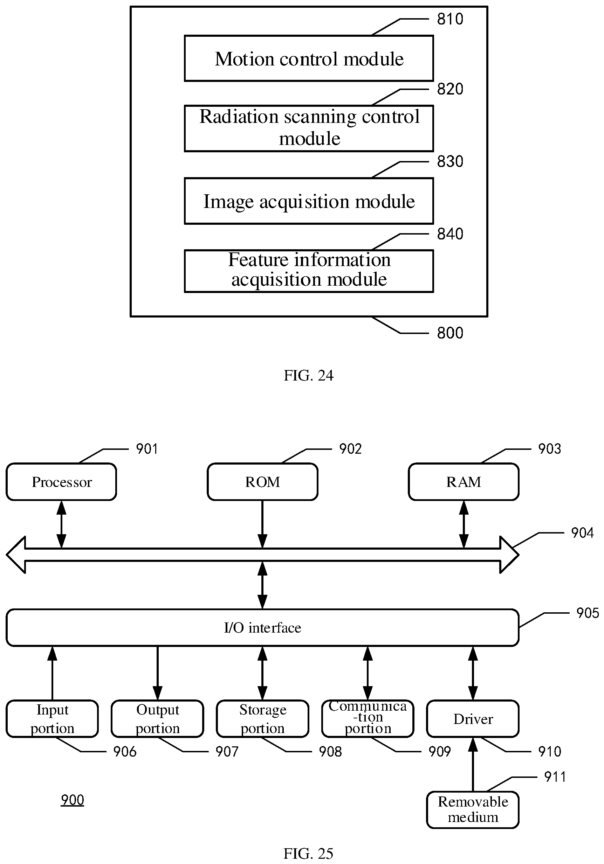

FIG. 24 schematically shows a block diagram of a structure of a device of acquiring feature information of an object to be inspected according to an embodiment of the present disclosure. The device 800 of acquiring feature information of the object to be inspected includes a motion control module 810, a radiation scanning control module 820, an image acquisition module 830 and a feature information acquisition module 840.

The motion control module 810 is used to control the object to be inspected to pass through the inspection device. The inspection device is used to scan and detect the object to be inspected. The inspection device includes: an inspection channel, where the object to be inspected enters and exits the inspection device through the inspection channel in a first direction; and an imaging system used for scanning and inspecting the object to be inspected.

The radiation scanning control module 820 is used to control the imaging system to perform radiation scanning on the object to be inspected.

The image acquisition module 830 is used to acquire a radiation scanning image of the object to be inspected.

The feature information acquisition module 840 is used to acquire the feature information of the object to be inspected through the radiation scanning image. The object to be inspected includes a first portion, an inspection portion and a second portion. In the process of controlling the imaging system to perform radiation scanning on the object to be inspected, the inspection portion is located between the first portion and the second portion in the first direction. The acquiring the feature information of the object to be inspected through the radiation scanning image includes: acquiring a first boundary line between the inspection portion and the first portion and a second boundary line between the inspection portion and the second portion through the radiation scanning image; and calculating a size between the first boundary line and the second boundary line in the first direction, so as to acquire a size of the inspection portion in the first direction.

According to the embodiment of the present disclosure, any two or more of the motion control module 810, the radiation scanning control module 820, the image acquisition module 830, and the feature information acquisition module 840 may be combined and implemented in one module, or any one of them may be split into a plurality of modules. Alternatively, at least some of the functions of one or more of these modules may be combined with at least some of the functions of other modules and implemented within one module. According to the embodiments of the present disclosure, at least one of the motion control module 810, the radiation scanning control module 820, the image acquisition module 830, and the feature information acquisition module 840 may be at least partially implemented as a hardware circuit, such as a field programmable gate array (FPGA), a programmable logic array (PLA), an on-chip system, a substrate system, a package system, and application specific integrated circuit (ASIC), or it may be achieved through any other reasonable way of integrating or encapsulating circuits, such as hardware or firmware, or through any one of software, hardware, and firmware, or an appropriate combination of any of them. Alternatively, at least one of the motion control module 810, the radiation scanning control module 820, the image acquisition module 830, and the feature information acquisition module 840 may be at least partially implemented as a computer program module, which may perform corresponding functions when running.

FIG. 25 schematically shows a block diagram of an electronic device applicable to acquire feature information of an object to be inspected according to an embodiment of the present disclosure.

As shown in FIG. 25, the electronic device 900 according to the embodiment of the present disclosure includes a processor 901, which may perform various appropriate actions and processes according to programs stored in a read-only memory (ROM) 902 or programs loaded from a storage portion 908 into a random access memory (RAM) 903. The processor 901 may include, for example, a general-purpose microprocessor (such as CPU), an instruction set processor and/or a related chipset and/or a specialized microprocessor (such as application specific integrated circuit (ASIC)), and so on. The processor 901 may further include an onboard memory for caching purposes. The processer 901 may further include a single processing unit or a plurality of processing units for performing different actions for the method flow according to the embodiment of the present disclosure.

In the RAM 903, various programs and data required for operations of the electronic device 900 are stored. The processor 901, ROM 902 and RAM 903 are connected to each other through a bus 904. The processor 901 performs various operations of the method flow according to the embodiment of the present disclosure by executing programs in ROM 902 and/or RAM 903. It should be noted that the program may also be stored in one or more memories other than ROM 902 and RAM 903. The processor 901 may also perform various operations of the method flow according to the embodiment of the present disclosure by executing programs stored in the one or more memories.

According to the embodiment of the present disclosure, the electronic device 900 may further include an input/output (I/O) interface 905. The input/output (I/O) interface 905 is also connected to the bus 904. The electronic device 900 may further include one or more of the following components connected to the I/O interface 905: an input portion 906 including a keyboard, a mouse, etc.; an output portion 907 including a cathode ray tube (CRT), a liquid crystal display (LCD) and a speaker, etc.; a storage portion 908 including a hard drive, etc.; and a communication portion 909 including a network interface card such as an LAN card, a modem, etc. The communication portion 909 performs communication processing through a network such as the Internet. A driver 910 is also connected to I/O interface 905 as desired. A removable medium 911, such as a disk, an optical disk, a magneto-optical disk, a semiconductor memory, etc., are mounted on the driver 910 as desired, so that the computer programs read out from the driver 910 are installed into the storage portion 908 as desired.

The present disclosure also provides a computer-readable storage medium. The computer-readable storage medium may be included in the device/apparatus/system described in the above embodiments. It may also exist separately without being assembled into the device/apparatus/system. The above-mentioned computer-readable storage medium stores one or more programs, and when the above one or more programs are executed, the method according to the embodiments of the present disclosure is implemented.

According to the embodiments of the present disclosure, the computer-readable storage medium may be a non-volatile computer readable storage medium. For example, it may include but not limited to a portable computer disk, a hard disk, a random access memory (RAM), a read-only memory (ROM), an erasable programmable read-only memory (EPROM or flash memory), a portable compact disk read-only memory (CD-ROM), an optical storage device, a magnetic storage device or any appropriate combination of the above. In the present disclosure, the computer-readable storage medium may be any tangible medium that contains or stores a program, which may be used by or in combination with an instruction execution system, an apparatus or a device. For example, according to the embodiments of the present disclosure, the computer-readable storage medium may include the ROM 902 and/or RAM 903 as described above and/or one or more memories other than the ROM 902 and the RAM 903.

The embodiments of the present disclosure further include a computer program product, which includes a computer program containing program code for executing the method shown in the flowchart. When the computer program product is running in the computer system, the program code is used to cause the computer system to implement an item recommendation method provided in the embodiments of the present disclosure.

When the computer program is executed by the processor 901, the above-mentioned functions defined in the system/apparatus of the embodiments of the present disclosure are executed. According to the embodiments of the present disclosure, the systems, apparatuses, modules, units, etc. described above may be implemented through computer program modules.

In an embodiment, the computer program may rely on tangible storage media such as optical storage device and a magnetic memory device. In another embodiment, the computer program may also be transmitted, distributed in the form of signals on the network medium, and downloaded and installed through the communication portion 909, and/or installed from the removable medium 911. The program code contained in this computer program may be transmitted using any suitable network medium, including but not limited to wireless, wired, etc., or any suitable combination of the above.

In such embodiments, the computer program may be downloaded and installed from the network through the communication portion 909, and/or installed from the removable medium 911. When the computer program is executed by processor 901, the above-mentioned functions defined in the system of the embodiments of the present disclosure are executed. According to the embodiments of the present disclosure, the systems, devices, apparatuses, modules, units, etc. described above may be implemented through computer program modules.

Embodiments of the present disclosure have been described above. However, these embodiments are for illustrative purposes only and are not intended to limit the scope of the present disclosure. Although each embodiment is described separately above, this does not mean that the measures in the various embodiments may not be used in conjunction to advantage. The scope of the present disclosure is limited by the accompanying claims and their equivalents. Without departing from the scope of the present disclosure, those of skill in the art may make various substitutions and modifications, and all of which should fall within the scope of the present disclosure.

## Claims

1. An inspection device for scanning and inspecting an object to be inspected, comprising:
an inspection channel, wherein the object to be inspected enters and exits the inspection device through the inspection channel;
an imaging system configured to scan and inspect the object to be inspected, and the imaging system comprises:
a radiation source configured to generate a ray, wherein the radiation source is disposed on one side of the inspection channel, and the ray at least forms a main beam surface applicable to scan and inspect the object to be inspected; and
a detector configured to receive the ray passing through the object to be inspected, wherein the detector is disposed on the other side of the inspection channel to form an inspection region between the radiation source and the detector; and
a posture adjustment structure disposed in the inspection region and configured to adjust a posture of the object to be inspected located in the inspection region,
wherein the object to be inspected has an inspection surface, and the posture adjustment structure adjusts the posture of the object to be inspected, so that the inspection surface and the main beam surface are in a same plane.

2. The inspection device of claim 1, wherein in the plane where the main beam surface is located, a relative position between the imaging system and the object to be inspected is changeable, so that the imaging system scans and inspects the object to be inspected at a plurality of angles.

3. The inspection device of claim 2, wherein the imaging system is rotatable relative to the object to be inspected in the plane where the main beam surface is located.

4. The inspection device of claim 1, wherein the imaging system comprises a plurality of detectors, the plurality of detectors are disposed opposite to the radiation source to form a plurality of main beam surfaces between the radiation source and the plurality of detectors, and the plurality of main beam surfaces are in the same plane; and
the posture adjustment structure adjusts the posture of the object to be inspected, so that the inspection surface and the plurality of main beam surfaces are in the same plane.

5. The inspection device of claim 1, wherein the posture adjustment structure moves the object to be inspected in a first direction, so that the object to be inspected has a plurality of inspection surfaces, wherein the first direction is parallel to a conveying direction of the object to be inspected.

6. The inspection device of claim 5, wherein for each inspection surface, the object to be inspected is positioned by the posture adjustment structure, so that the inspection surface and the main beam surface are in the same plane.

7. The inspection device of any one of claims 1 to 6, wherein the object to be inspected comprises an inspection portion, the inspection portion has the inspection surface, and a ratio of an area value of a projection of the inspection portion in the first direction to a size value of the inspection portion in the first direction is greater than or equal to 10, wherein the first direction is parallel to a conveying direction of the object to be inspected.

8. The inspection device of claim 7, wherein a ratio of a size of the detector in the first direction to the size value of the inspection portion in the first direction is in a range of 1 to 8.

9. The inspection device of any one of claims 1 to 6, wherein a focus size of the radiation source is less than or equal to 1 mm.

10. The inspection device of claim 5, wherein the posture adjustment structure comprises:
a substrate extended in the first direction, wherein the substrate has a carrying surface, and the carrying surface is applicable to place the object to be inspected;
a first adjustment assembly disposed on the substrate and configured to drive the object to be inspected on the carrying surface to deviate around a second direction and configured to drive the object to be inspected to move in the first direction;
at least one second adjustment assembly disposed on the substrate and configured to drive the object to be inspected to rotate around a third direction,
wherein any two of the first direction, the second direction and the third direction intersect with each other.

11. The inspection device of claim 10, wherein the first adjustment assembly comprises:
a chassis slideable relative to the substrate in the first direction;
a rotating element rotatably disposed on the chassis with an axis parallel to the second direction as a rotational axis, wherein the rotating element is configured to drive the object to be inspected on the carrying surface to deviate around the second direction under a driving of an external force, and the rotating element is configured to drive the object to be inspected to move in the first direction under a driving of the chassis.

12. The inspection device of claim 5 or 10, wherein the inspection region comprises an entrance and an exit;
the inspection device further comprises a first transmission mechanism, and the first transmission mechanism is disposed on a side of the entrance of the inspection region and configured to convey the object to be inspected to the inspection region.

13. The inspection device of claim 12, wherein the first transmission mechanism comprises:
a driving device;
a lead screw connected to the driving device, wherein the lead screw is driven by the driving device;
a first slide rail, wherein an extension direction of the first slide rail is parallel to an extension direction of the lead screw; and
a sliding mechanism connected to the lead screw, wherein the lead screw drives the sliding mechanism to move, so that the sliding mechanism pushes the object to be inspected to slide on the first slide rail.

14. The inspection device of claim 1, wherein the imaging system comprises a plurality of radiation sources and a plurality of detectors, the plurality of radiation sources are respectively disposed opposite to the plurality of detectors to form a plurality of source-detector assemblies, a main beam surface is formed between the source and the detector of each source-detector assembly, and the main beam surfaces of the plurality of source-detector assemblies are located in the same plane; and
the posture adjustment structure adjusts the posture of the object to be inspected, so that the inspection surface and the main beam surfaces of the plurality of source-detector assemblies are in the same plane.
